**Europäisches Patentamt**

(19) **European Patent Office**

**Office européen des brevets**

(11) Veröffentlichungsnummer: **0 144 831**
**B1**

(12) **EUROPÄISCHE PATENTSCHRIFT**

(45) Veröffentlichungstag der Patentschrift:
**25.01.89**

(21) Anmeldenummer: **84113773.0**

(22) Anmeldetag: **14.11.84**

(51) Int. Cl.⁴: **G 11 B 20/18,** G 11 B 27/36, G 11 B 7/00, G 07 C 3/14

(54) Geräteanordnung zur Fehlerermittlung bei plattenförmigen Informationsträgern.

(30) Priorität: **17.11.83 DE 3341628**

(43) Veröffentlichungstag der Anmeldung:
**19.06.85 Patentblatt 85/25**

(45) Bekanntmachung des Hinweises auf die Patenterteilung:
**25.01.89 Patentblatt 89/4**

(84) Benannte Vertragsstaaten:
**AT BE CH DE FR GB IT LI LU NL SE**

(56) Entgegenhaltungen:
EP-A-0 073 519
DE-A-2 851 822
DE-B-1 237 205
FR-A-1 282 025
US-A-3 365 706
US-A-4 307 419
US-A-4 325 134
US-A-4 415 938

PROC. OF THE SOCIETY OF PHOTO-OPTICAL
INSTRUMENTATION ENGINEERS, SPIE, Band 177,
Optical information Storage, 1979, Seiten 135-147,
BELLINGHAM, WA (US). C.W. RENO et al.:
"Optical disc recording at 50 megabits/second".
PATENTS ABSTRACTS OF JAPAN, Band 6, Nr. 162,
(P-137) (1040), 25. August 1982.
PROCEEDINGS OF SPIE - THE INTERNATIONAL
SOCIETY FOR OPTICAL ENGINEERING, Band 420,

(73) Patentinhaber: **POLYGRAM GmbH,
Glockengiesserwall 3, D-2000 Hamburg 1 (DE)**

(72) Erfinder: **Wengler, Rolf, Ing. grad., Geveker Kamp
69, D-3000 Hannover 91 (DE)**

(74) Vertreter: **Meier, Friedrich, Dipl.- Ing., Philips
Patentverwaltung GmbH Wendenstrasse 35
Postfach 10 51 49, D-2000 Hamburg 1 (DE)**

(56) Entgegenhaltungen: (Fortsetzung)
**Optical storage media, 6-10. Juni, 1983,
BELLINGHAM, WA (US). Seiten 113-120. R. HAZEL:
"An overview of optical disk testers".
RCA REVIEW, Band 43, Nr. 1, März, 1982, Seiten 228-
256, PRINCETON, N.J. (US). D.P. BARTON et al.:
"VideoDisc Testing at RCA Laboratories".
PATENTS ABSTRACTS OF JAPAN, Band 7, Nr. 121,
(P-199) (1266), 25. Mai, 1983.**

EP 0 144 831 B1

## Beschreibung

Die Erfindung bezieht sich auf eine Geräteanordnung zur Ermittlung von Fertigungsfehlern bei der Herstellung von Optisch auslesbaren plattenförmigen Informationsträgern hoher Speicherdichte mit hierin abgespeicherter Information in Form eines fehlerkorrigierenden Codes, insbesondere Compact Disc.

Bei der Herstellung solcher Informationsträger sind ständig stichprobenartige Qualitätsprüfungen erforderlich, bei denen festzustellen ist, ob bei der Wiedergabe der Information die hieran zu stellenden Qualitätsanforderungen in ausreichendem Maße gewährleistet sind. Bei Informstionsspuren in der Größenordnung von 1 µm lassen sich im allgemeinen auch bei sehr hohem Stand der Technologie Störstellen in Form von sogenannten "Dropouts" die durch Staub und optische Inhomogenitäten des verwendeten Kunststoffs verursacht sind, nicht vermeiden. Aus diesem Grunde wurde bei der digitalen Signalaufzeichnung für optisch auslesbare Audioplatten, die unter der Bezeichnung Compact Disc im Handel sind, ein fehlerkorrigierender Code benutzt, mit dessen Hilfe es möglich ist, bei der Wiedergabe der Information empfängerseitig den ausgelesenen Code auf Fehler hin zu überwachen und erkannte Fehler gegebenenfalls zu korrigieren. Die Leistungsfähigkeit eines solchen wiedergabeseitigen Fehlerkorrektursystems ist natürlich nicht beliebig groß so daß auch hier bei der Wiedergabe unerwünschte störende Geräusche auftreten können, wenn die Fehler eine Größenordnung erreichen, die vom Fehlerkorrektursystem nicht mehr beherrscht werden.

Der Erfindung liegt die Aufgabe zugrunde, ein Gerätekonzept anzugeben, das bei relativ geringem technischen Aufwand eine einwandfreie umfassende Erfassung von Fertigungsfehlern einschließlich deren Bewertung ermöglicht.

Ausgehend von einer Geräteanordnung der einleitend beschriebenen Art wird diese Aufgabe gemäß der Erfindung durch die im Kennzeichen des Patentanspruchs 1 angegebenen Merkmale gelöst.

Bei der Erfindung wird von der Erkenntnis ausgegangen, daß das wiedergabeseitig vorgesehene Fehlerkorrektur-System hinsichtlich seiner Fehleranzeige- bzw. Fehlersignalausgänge für die Erfassung und Bewertung von Fertigungsfehlern in außerordentlich vorteilhafter Weise herangezogen werden kann. Für die Wiedergabe der zu überprüfenden Platten einschließlich der Fehlermeldesignale bedarf es somit keiner umfangreichen Meßgeräteentwicklung sondern kann unmittelbar auf handelsübliche Wiedergabegeräte zurückgegriffen werden. Es bedarf hierzu lediglich pro Wiedergabegerät einer Schnittstelle, über die die eigentliche Fehlerauswerteeinheit angeschlossen werden kann.

Besonders zweckmäßig gestalten sich die Verhältnisse, wenn mehrere solcher über Schnittstellen mit Fehlerauswerteeinheiten versehenen Wiedergabegeräte über eine Abfrageeinrichtung mit einem gemeinsamen Fehlerregistriergerät zusammenarbeiten.

Weitere vorteilhafte Ausgestaltungen der Erfindung sind in den Patentansprüchen 2 bis 10 angegeben.

Anhand eines in der Zeichnung dargestellten Ausführungsbeispiels soll die Erfindung im folgenden noch näher erläutert werden.

In der Zeichnung bedeuten

Fig. 1 das Blockschaltbild eines handelsüblichen Wiedergabegerätes für CD im Blockschaltbild, das mit einer Schnittstelle nach der Erfindung ausgerüstet ist,

Fig. 2 das Blockschaltbild von vier einem gemeinsamen Registriergerät zugeordneten Fehlerauswerteeinheiten für vier Wiedergabegeräte,

Fig. 3 bis 8 nähere Schaltungseinzelheiten des Blockschaltbildes nach Fig. 2 angebende Blockschaltbilder,

Fig. 9 und 10 die Wirkungsweise der Schaltungsanordnung nach Fig. 2 näher erläuternde Zeitdiagramme.

Das Blockschaltbild des Wiedergabegerätes PR entspricht dem des im Handel angebotenen Philips Players CD 100. Es weist eine optische Leseeinrichtung OL auf, die mit Hilfe eines Laserstrahls LS die Informationsspur einer digitalen Audioplatte abtastet und das Abtastergebnis in einem optoelektrischen Wandler in ein Hochfrequenzsignal umsetzt. Dieses Hochfrequenzsignal wird einerseits einem Hochfrequenzvorverstärker HF-PA und andererseits dem optischen Nachführsystem ON für den Strahlfokus und die Radialsteuerung zugeführt. Dem Hochfrequenzvorverstärker HF-PA ist ein Demodulator DEMOD nachgeschaltet, der eingangsseitig mit einem in seiner Frequenz kontrollierten Oszillator VCO und ausgangsseitig mit einem Dropout-Demodulator DO-DE, einem Fehlercode-Demodulator EFM-DE und einem Sub-Codeprozessor SP zusammenarbeitet. Der Fehlercode-Demodulator EFM-DE ist ausgangsseitig mit einem Interpolator IPO verbunden, der seinerseits mit einem Speicher M und der Fehlerkorrektureinheit EC Zusammenarbeitet. Das im Interpolator fehlerkorrigierte Hochfrequenzsignal wird anschließend der weiteren Ausgangsschaltung AS zugeführt, in der das digitale Signal zunächst in die analoge Ebene rückumgesetzt und anschließend in einem Audioverstärker verstärkt wird. Die die Fehlerauswerteeinheit FAF mit dem Wiedergabegerät PR verbindende Schnittstelle IU besteht eingangsseitig aus einer Mehrkanaltreiberstufe BU1, die eingangsseitig

mit den Ausgängen C1F1, C1F2, C2F1, C2F2 und RFCL der Fehlerkorrektureinheit EC verbunden ist. Eine weitere Mehrfachtreiberstufe BUO ist eingangsseitig mit den Ausgängen der optischen Nachführung ON für das radiale Fehlersignal und das Fokusfehlersignal, ferner mit dem Ausgang des Hochfrequenzvorverstärkers HF-PA sowie mit den Ausgängen des Sub-Codeprozessors SP für Zeit- und Bestellnummernangabe verbunden. Die zugehörigen Ausgänge der Mehrfachtreiberstufe BUO sind entsprechend mit Rad für das radiale Fehlersignal, Foc für das Fokusfehlersignal, HF für das hochfrequente Ausgangssignal des Hochfrequenzvorverstärkers, Zt für den Zeitsignalausgang und BN für den Bestellnummernausgang des Sub-Codeprozessors SP bezeichnet.

Die Ausgänge C1F1 und C1F2 der Fehlerkorrektureinheit EC melden auftretende Fehler der sogenannten ersten Korrekturebene, d.h. sie zeigen Fehler an, die hintereinander auftreten, und zwar bis maximal drei Fehler. Die Ausgänge C2F1 und C2F2 der Fehlerkorrektureinheit EC zeigen Fehler an die der sogenannten zweiten Korrekturebene angehören, das sind solche Fehler, bei denen mehr als drei Einzelfehler unmittelbar hintereinander auftreten. Der Ausgang RFCL liefert einen Verarbeitungstakt, den auch die Schnittstelle IU zur Steuerung benötigt.

Wie die Schnittstelle IU weiterhin zeigt, werden die von den Ausgängen C1F1, C1F2, C2F1, C2F2 und RFCL der Fehlerkorrektureinheit EC gelieferten Signale auf der Ausgangsseite der Mehrfachtreiberstufe BU1 dem Pufferspeicher LT zugeführt. Der Verarbeitungstakt am Anschluß RFCL liegt dabei am Pufferspeicher LT über das Verzögerungsglied τ an. Die den eingangsseitigen Anschlüssen C1F1 und C1F2 entsprechenden Ausgänge des Pufferspeichers LT werden einem Decoder DE-2/4 zugeführt, der die an seinen beiden Eingängen zugeführten Signale in vier Ausgangssignale überführt. In gleicher Weise werden die beiden Ausgangsanschlüsse des Pufferspeichers LT, die den eingangsseitigen Anschlüssen C2F1 und C2F2 entsprechen, über einen Decoder DE-2/4 auf vier Ausgangsanschlüsse übergeführt. Sämtliche Ausgangsanschlüsse der beiden Decoder DE-2/4 bilden über die Mehrfachtreiberstufe BU2 hinweg neben den Fehlerkanalanschlüssen Rad, Foc, HF sowie den Sonderkanalanschlüssen Zt und Bn Fehlerkanalanschlüsse E01, E11, E21, E31, E02, E12, E22 und E32. Weiterhin wird der Verarbeitungstakt am Anschluß RFCL über die Mehrfachtreiberstufe BU1 hinweg unmittelbar den Decodern DE-2/4 zur Steuerung zugeführt. Die Decoder DE-2/4 können beispielsweise durch den Baustein 74139, der Pufferspeicher LT durch den Baustein 7495 und die Mehrfachtreiberstufe BU2 durch den Baustein 74244 von Texas Instr. realisiert sein.

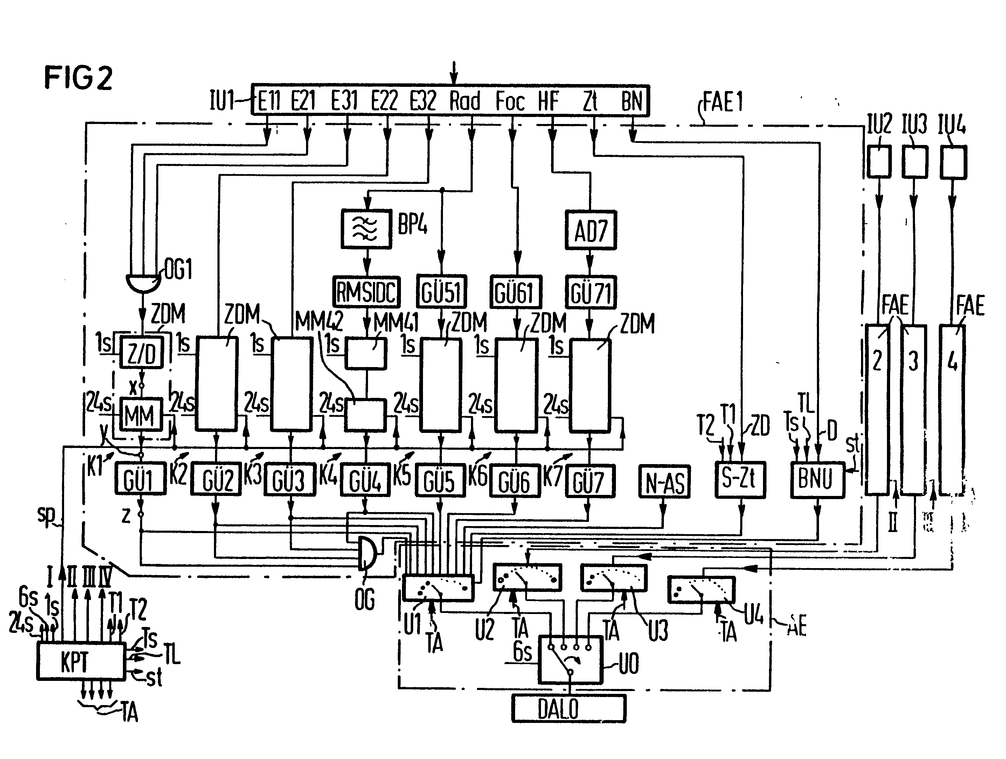

Das Blockschaltbild nach Fig. 2 zeigt die eigentliche Fehlerausweanordnung für maximal vier gleichzeitig in Betrieb befindliche Wiedergabegeräte. Für das erste Wiedergabegerät mit der Schnittstelle IU1 ist die zugehörige Fehlerauswerteeinheit FAE1 näher dargestellt und gleichzeitig auf der Ausgangsseite der Schnittstelle IU1 die Ausgangsanschlüsse angegeben, die für die Fehlerauswerteeinheit FAE1 von Bedeutung sind. Die Schnittstellen IU2, IU3 und IU4 mit den ihnen nachgeschalteten Fehlerauswerteeinheiten FAE2, FAE3 und FAE4 für die weiteren drei Wiedergabegeräte sind nur durch einzelne Blöcke in der Figur 2 angedeutet. Die Fehlerauswerteeinheiten FAE1, FAE2, FAE3 und FAE4 sind ausgangsseitig über eine Abfrageeinrichtung AE mit einem ihnen allen gemeinsamen Fehlerregistriergerät DALO verbunden. Weiterhin ist den Fehlerauswerteeinheiten und der Abfrageeinrichtung ein Kontrollpult KPT gemeinsam zugeordnet, das die Zeit- und Steuertakte für die Fehlerauswerteeinheiten und die Abfrageeinrichtung erzeugt.

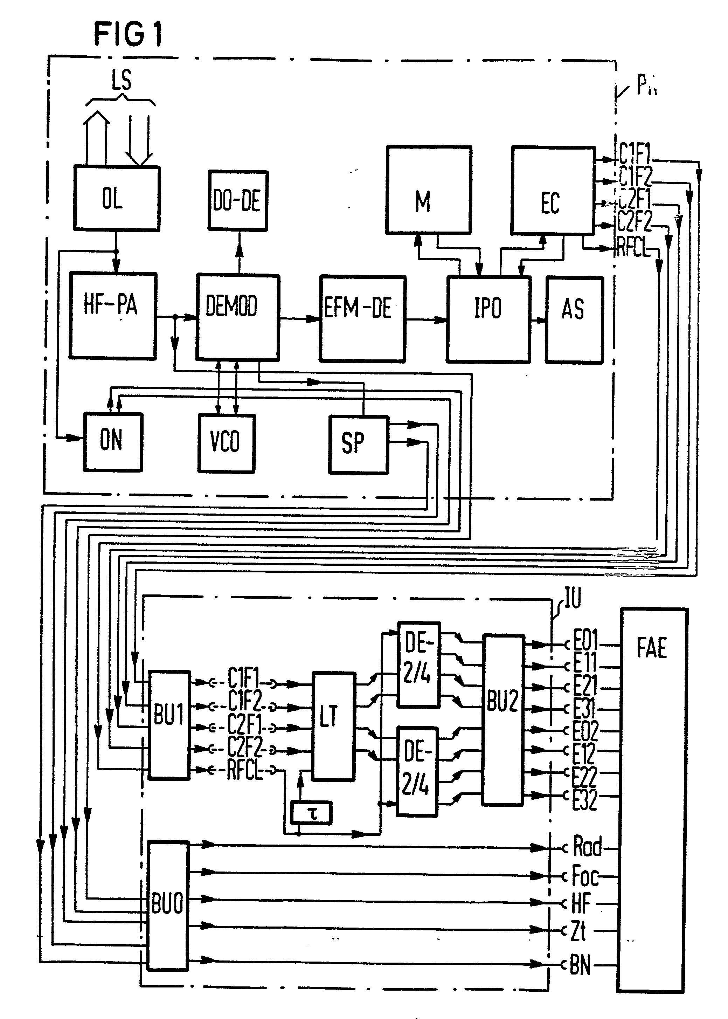

Wie die Schnittstelle IU1 nach Fig. 2 zeigt, wertet die Fehlerauswerteeinheit FAE1 die an den Anschlüssen E11, E21, E31, E22, E32, Rad, Foc, HF, Zt und BN auftretenden Signale aus. Ein Signal am Anschluß E11 bedeutet, daß der Decoder DE-2/4 nach Fig. 1 ein falsches Symbol im Datenblock erkennt. Zwei falsche Symbole erkennt der Decoder DE-2/4, wenn am Anschluß E21 ein Signal auftritt und mehr als zwei falsche Symbole werden vom Decoder am Anschluß E31 angezeigt. Der den Anschlüssen C2F1 und C2F2 über den Pufferspeicher LT zugeordnete Decoder DE-2/4 nach Fig. 1 erkennt ein der zweiten Korrekturebene angehörendes falsches Symbol im Datenblock, wenn am Anschluß E22 ein Signal auftritt. Am Anschluß E32 bedeutet ein Signal mehr als zwei der zweiten Korrekturebene angehörende falsche Symbole im Datenblock.

Jedem der ausgangsseitigen Anschlüsse einer Schnittstelle Kann in der zugehörigen Fehlerauswerteeinheit ein Fehlerkanal zugeordnet werden. Beim Ausführungsbeispiel nach Fig. 2 sind die Anschlüsse E11, E21 und E31 über das ODER-Gatter OG1 zu einem ersten Fehlerkanal K1 vereinigt. Der Fehlerkanal K1 selbst besteht aus der Hintereinanderschaltung des Zählers mit ausgangsseitigem Decodierer Z/D mit dem Maximalwertspeicher MM und dem Grenzwertüberprüfer GÜ1. Der Zähler zählt hierbei die Fehlerereignisse und wird mit dem Takt 1s nach jeder Sekunde in den Ausgangszustand rückgesetzt. Das decodierte Zählergebnis wird dem Maximalwertspeicher MM zugeführt, der seinerseits über 24 sec hinweg lediglich den Maximalwert festhält und nach 24 sec mit dem Takt 24 s in seine informationsfreie Ausgangsstellung rückgesetzt wird. Der im Maximalwertspeicher MM gespeicherte Maximalwert wird im Grenzwertüberprüfer GÜ1 daraufhin überprüft, ob sein Wert eine vorgegebene Schwelle überschreitet und, sofern dies der Fall ist, ausgangsseitig angezeigt. Der Zähler mit nachgeschaltetem Decodierer Z/D und der Maximalwertspeicher MM sind in Fig. 2 zur Fehlererfassungsschaltung ZDM zusammengefaßt. Der Anschluß E22 der Schnittstelle IU1 wird für einen zweiten Fehlerkanal K2 der Fehlerauswerteeinheit FAE1 benutzt. Er besteht seinerseits aus der Fehlererfassungsschaltung ZDM mit nachgeschaltetem Grenzwertüberprüfer GÜ2. Entsprechendes gilt für den Anschluß E32 der Schnittstelle IU1. Bei diesem Fehlerkanal K3 ist der Grenzwertüberprüfer mit GÜ3 bezeichnet.

Der das radiale Fehlersignal liefernde Anschluß Rad der Schnittstelle IU1 wird zur unterschiedlichen Bewertung des Signals in zwei Fehlerkanäle K4 und K5 aufgeteilt. Im Fehlerkanal K4 wird das analoge Fehlersignal zunächst einem Bandpaß BP4 zugeführt, dessen Bandbreite empirisch in den Grenzen 500 Hz und 2000 Hz festgelegt ist.

Weiterhin enthält der Bandpaß BP4 eine Bandsperre in Form eines Saugkreises, dessen Resonanzfrequenz bei 650 Hz liegt und der dazu dient, die dem radialen Fehler-Signal überlagerte Wobbelfrequenz zu unterdrücken. Das Ausgangssignal des Bandpasses BP4 wird anschließend einem Effektivwertbildner RMS/DC zugeführt, der ausgangsseitig mit dem Maximalwertspeicher MM41 verbunden ist. Der Maximalwertspeicher MM41 entspricht dem Zähler Z mit nachgeschaltetem Decodierer Z/D der Fehlererfassungsschaltung ZDM der Kanäle K1 bis K3, der jede Sekunde vom Takt 1s in seine informationsfreie Ausgangsstelle rückgesetzt wird und seinen in diesem Zeitraum ermittelten Maximalwert jeweils an den Maximalwertspeicher MM42 weitergibt. Der Maximalwertspeicher MM42 entspricht dem Maximalwertspeicher MM der Fehlererfassungsschaltung ZDM.

Der Fehlerkanal K5 weist eingangsseitig den Grenzwertüberprüfer GÜ51 auf. Wie noch näher erläutert werden wird gibt der Grenzwertüberprüfer GÜ51 in Abhängigkeit der Amplitude des radialen Fehlersignals Zählimpulse ab, die in der ihm nachgeschalteten Fehlererfassungs-Schaltung ZDM erfaßt und anschließend im Grenzwertüberprüfer GÜ5 in der schon beschriebenen Weise ausgewertet werden. Der Fehlerkanal K6 für das Fokussignal, das ebenfalls ein Analogsignal ist, wird in der gleichen Weise erfaßt wie das analoge radiale Fehlersignal im Fehlerkanal K5. Der fehlerkanaleingangsseitige Grenzwertüberprüfer ist hier mit GÜ61 und der fehlerkanalausgsngsseitige Grenzwertüberprüfer mit GÜ6 bezeichnet.

Der Fehlerkanal K7 der Fehlerauswerteeinheit FAE1 für das Hochfrequenzsignal weist eingangsseitig den Amplitudendetektor ÀD7 auf. An den Amplitudendetektor AD7 schließen sich hintereinander der Grenzwertüberprüfer GÜ71, die Fehlererfassungsschaltung ZDM und der Grenz-Wertüberprüfer GÜ7 an. Der Fehlerkanal K7 hat abgesehen vom Amplitudendetektor AD7 praktisch denselben Aufbau wie die Fehlerkanäle K5 und K6. Die Fehlerauswerteeinheit FAE1 wie auch die weiteren Fehlerauswerteeinheiten FAE2, FAE3 und FAE4 weisen weiterhin einen Nummernspeicher N-AS für die Nummer des ihnen zugeordneten Wiedergabegerätes auf. Diese Nummer wird einmal von Hand in den Nummernspeicher eingespeichert und steht ausgangsseitig bei Abfragen des Nummernspeichers durch die Abfrageeinrichtung zur Verfügung.

Der Anschluß Zt der Schnittstelle IU1 bildet einen Sonderkanal in Form eines Spielzeitumsetzers S-Zt, dem über den erwähnten Anschluß Zt die Zeitdaten ZD zugeführt werden und der gleichzeitig von den Steuertakten T1 und T2, die vom Kontrollpult KPT erzeugt werden, gesteuert wird.

Weiterhin weist die Fehlerauswerteeinheit FAE1 einen Bestellnummernumsetzer BNU als Sonderkansl auf, dem eingangsseitig über den Anschluß BN der Schnittstelle IU1 die Daten D zugeführt werden und der weiterhin von den Takten Ts und TI gesteuert wird. Die Takte Ts und TI werden wiederum vom Kontrollpult KPT geliefert.

Wie ferner zu erkennen ist, sind die Ausgänge der Fehlerkanäle K1, K2 ... K4 mit den Eingängen eines Vierfach-ODER-Gatters OG verbunden, das ausgangsseitig wie die Ausgänge sämtlicher Fehlerkanäle einschließlich der Sonderkanäle und des Nummernspeichers für das Wiedergabegerät mit dem ersten Kontakt eines Umschalters U1 der Abfrageeinrichtung AE verbunden ist. In entsprechender Weise weist die Abfrageeinrichtung AE für die übrigen drei Fehlerauswerteeinheiten FAE2, FAE3 und FAE4 entsprechende Umschalter U2, U3 und U4 auf. Die Schaltkontakte dieser vier Umschalter U1, U2, U3 und U4 sind mit den Kontakten eines diesen vier Umschaltern übergeordneten Umschalters U0 verbunden, dessen Schaltkontakt wiederum mit dem Eingang des Fehlerregistriergerätes DALO in Verbindung steht. Die Umschalter U1, U2 ... U4 fragen bei einem Durchlauf, der hierbei kleiner als 6 sec ist und vom Takt TA gesteuert wird, nacheinander den Ausgang des ODER-Gatters OG der Fehlerkanäle K1, K2 ... K7, des Nummernspeichers für das Wiedergabegerät N-AS sowie die Ausgänge der beiden Sonderkanäle ab und geben diese Information in Form eines Fehlerinformationsblocks an das Fehlerregistriergerät DALO ab. Der Umschalter U0 wird im Rhythmus von 6 Sec durch den Takt 6 s weitergeschaltet, so daß innerhalb von 24 sec die vier Fehlerauswerteeinheiten FAE1, FAE2 ... FAE4 einmal abgefragt werden.

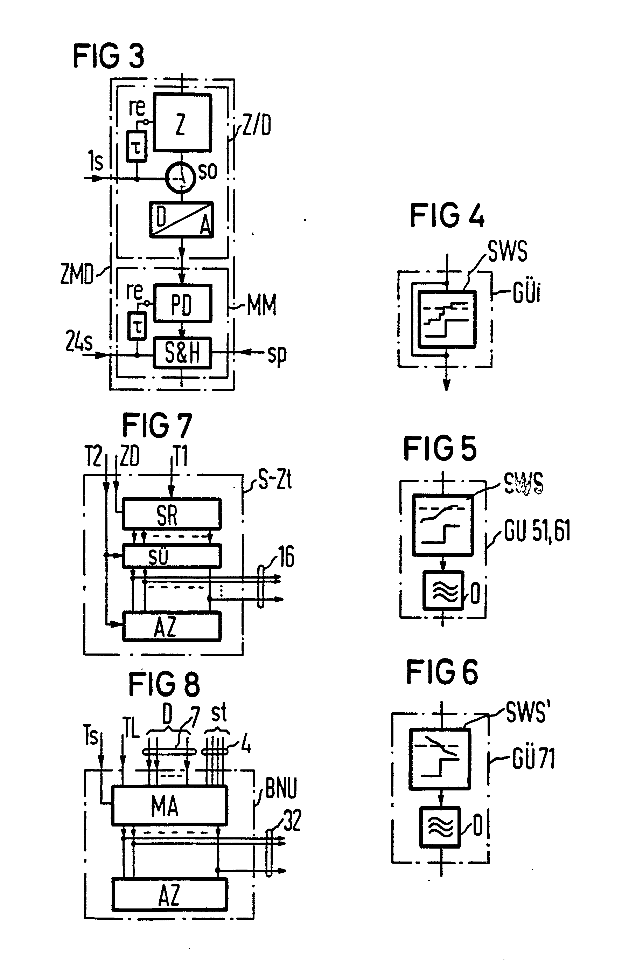

Um den Betrieb flexibel gestalten zu können, weist das Kontrollpult KPT vier Steuersignalausgänge I, II, III und IV für die vier Fehlerauswerteeinheiten auf, über die hinweg die Fehlerauswerteeinheiten wahlweise gesperrt werden können. Wie am Blockschaltbild der Fehlerauswerteeinheit FAE1 gezeigt ist, geschieht das Sperren der Fehlerkanäle K1 bis K7 durch Sperren des Maximalwert-Speichers MM der Fehlererfassungsschaltung ZDM bzw. durch Sperren des Maximalwertspeichers MM42. Der vom zugehörigen Umschalter U1, U2, U3 und U4 zuerst abgetastete Anschluß des ODER-Gatters OG gibt die Möglichkeit, des Fehlerregistriergerät DALO lediglich dann zu aktivieren, wenn am Ausgang des ODER-Catters OG eine Grenzwertüberschreitung und damit ein zu registrierender Fehler angezeigt wird. Dies ist deshalb sinnvoll, weil, wie anhand der Fig. 4 noch näher erläutert werden wird, an den Ausgängen der Grenzwertüberprüfer nicht nur die die in den Grenzwertüberprüfern festgelegten Schwellen überschreitenden Werte angezeigt werden sondern auch alle übrigen an den Ausgängen der Maximalwertspeicher auftretenden Werte zusätzlich auftreten können.

Fig. 3 zeigt den prinzipiellen Aufbau einer Fehlererfassungsschaltung ZDM, die aus der Hintereinanderschaltung eines Zählers Z mit anschließendem Digital-Analogwandler D/A und eines Maximalwertspeichers MM besteht. Dem Zähler Z wird hierbei der Takt 1s über das Verzögerungsglied $\tau$ am Rücksetzeingang re zugeführt. Weiterhin steuert der Takt 1s den Arbeitskontakt des Schalters so, über den der Zählererausgang mit dem nachfolgenden Digital-Analogwandler D/A verbunden ist. Der Zähler Z, dem eingangsseitig die Fehlerereignisse zugeführt und der die Zählereignisse jeweils eine Sekunde lang aufaddiert, gibt das Ergebnis über den Schalter so an den Digital-Analogwandler D/A und wird anschließend in Seinen Anfangszählzustand rückgesetzt.

Der Maximalwertspeicher MM besteht aus dem Spitzendetektor PD, dem die Abtasthalteschaltung S & H nachgeschaltet ist. Der Takt 24 s ist dem Spitzendetektor PD über das Verzögerungsglied $\tau$ am Rücksetzeingang re zugeführt. Gleichzeitig stellt der Takt 24 s den Übernahmetakt für die Abtasthalteschaltung S & H dar. Der Spitzendetektor PD weist im wesentlichen einen Ladekondensator auf, der innerhalb von 24 sec auf den in dieser Zeit auftretenden höchsten Ausgangswert des Digital-Analogwandlers D/A aufgeladen wird. Dieser Wert wird dann am Ende einer Periode von 24 sec von der Abtasthalteschaltung S & H übernommen und unmittelbar anschließend der Ladekondensator im Spitzendetektor PD entladen. Die Abtasthalteschaltung S & H ist über die Sperrleitung sp mit dem Kontrollpult KPT nach Fig. 2 verbunden, über die sie vom Kontrollpult wahlweise geerdet und damit gesperrt werden kann.

Die Grenzwertüberprüfer GÜi, die jeweils die Ausgangsseite der Fehlerkanäle K1, K2 ... K7 darstellen, bestehen, wie Fig. 4 zeigt, im wesentlichen aus einer Schwellwertschaltung SWS, deren Schwelle einstellbar ist und die über eine nicht dargestellte Kippstufe hinweg ausgangsseitig einen Potentialsprung anzeigen, wenn das eingangsseitige Signal die Schwelle überschreitet. Gleichzeitig ist der Eingang der Schwellwertschaltung SWS mit dem Ausgang verbunden, um eine Registrierung der eingangsseitigen Signalwerte auch in dem Falle zu ermöglichen, in dem diese eingangsseitigen Signalwerte die Schwelle der Schwellwertschaltung SWS nicht überschreiten.

Fig. 5 zeigt eine Ausführungsform der in den Fehlerkanälen 5 und 6 auf der Eingangsseite verwendeten Grenzwertüberprüfer GÜ51 und GÜ61. Sie bestehen eingangsseitig aus der im Zusammenhang mit Fig. 4 bereits erläuterten Schwellwertschaltung SWS, der ein vom Ausgang der Schwellwertschaltung gesteuerter Oszillator O nachgeschaltet ist. Auf diese Weise wird es möglich, dem Zähler Z auf der Eingangsseite der diesen Grenzwertüberprüfern in den genannten Fehlerkanälen nachgeschalteten Fehlererfassungsschaltungen innerhalb der 1-sec-Perioden die zeitliche Dauer zu ermitteln, in der das zu überwachende Signal die Schwelle der Schwellwertschaltung SWS überschreitet.

Eine Fig. 5 entsprechende Schaltung für den Grenzwertüberprüfer GU71 auf der Eingangsseite des Fehlerkanals K7 zeigt Fig. 6. Der Grenzwertüberprüfer GÜ71 unterscheidet sich von den Grenzwertüberprüfern GÜ51 und GÜ61 lediglich dadurch, daß hier die Schwellwertschaltung SWS' anspricht, wenn das eingangsseitige analoge Fehlersignal die eingestellte Schwelle unterschreitet.

Fig. 7 zeigt eine Ausführungsform des Spielzeitumsetzers S-ZT. Er weist ein vom Takt T1 fortgeschaltetes Schieberegister SR auf, dem eingangsseitig die Zeitdaten ZD zugeführt werden. Sobald das Schieberegister SR gefüllt ist, werden nach Art einer Serien-Parallelumsetzung die Schieberegisterausgänge über den vom Takt T2 gesteuerten Übergabeschalter sü an eine Anzeigevorrichtung AZ sowie an den Ausgang abgegeben, des hierbei aus einem sechzehn Leitungen umfassenden Leitungsbundel besteht. Die Anzeigevorrichtung AZ wird ebenfalls vom Takt T2 gesteuert.

Fig. 8 zeigt schließlich noch eine Ausführungsform des Bestellnummernumsetzers BNU, der aus einer Speicheranordnung MA besteht. Die Daten D werden dieser Speicheranordnung über ein Leitungsbündel von sieben Leitungen zugeführt. Weiterhin wird die Speicheranordnung MA mit, einem Schreibtakt Ts und einem Löschtakt Tl sowie durch Steuersignale st, die hierbei über vier Leitungen zugeführt werden, gesteuert. Auch hier wird gleichsam über die gesteuerte Speicheranordnung MA eine Serien-Parallelumsetzung durchgeführt, über die hinweg einerseits die Anzeigevorrichtung AZ bedient und andererseits die Bestellnummerninformation-Paralleldarstellung über ein Leitungsbündel aus 32 Leitungen ausgangsseitig an die Abfrageeinrichtung AE nach Fig. 2 abgegeben wird.

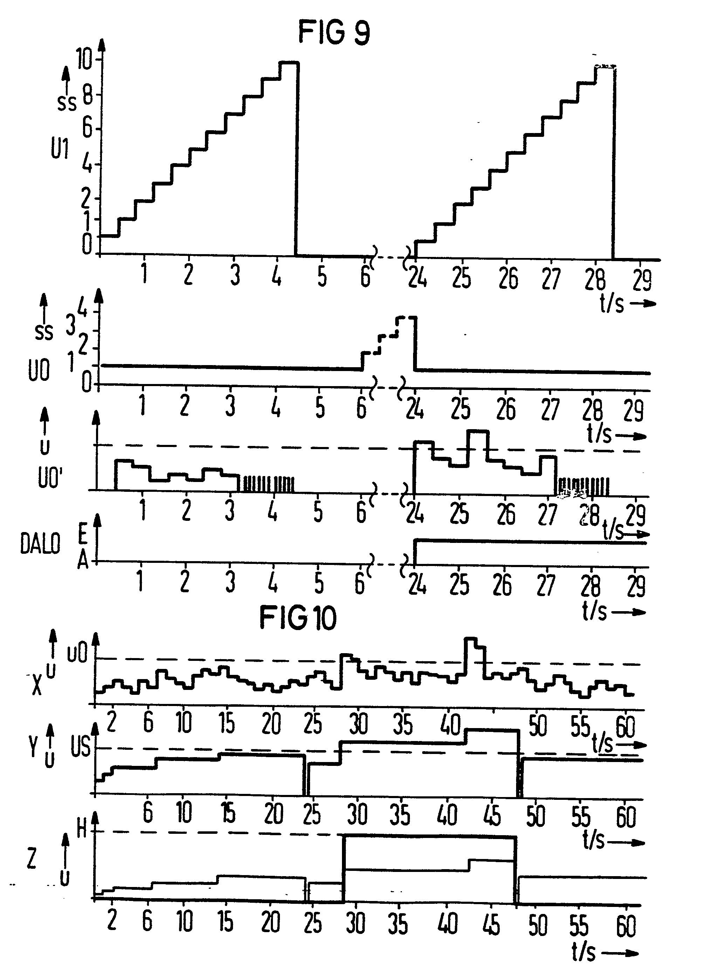

Zum besseren Verständnis der Arbeitsweise der Fehlerauswerteeinheiten FAE1, FAE2 ... FAE4 im Zusammenwirken der Abfrageeinrichtung AE und dem Fehlerregistriergerät DALO sind in den Figuren 9 und 10 einige Zeitdiagramme dargestellt.

In Fig. 9 zeigt das mit U1 bezeichnete Zeitdiagramm über der Zeit t in Sekunden das schrittweise Abfragen der Fehlerkanalausgänge sowie des Ausgangs des Nummernspeichers für das Wiedergabegerät und der Sonderkanäle. Hierbei sind auf der Ordinate die Schaltschritte ss von 0 bis 10 aufgetragen. Nach 4,5 sec ist der Umschalter U1 über sämtliche Umschaltkontakte hinweggelaufen und nimmt dann eine Ausgangsruhestellung ein, bis er nach 24 sec über seinen Steuertakt TA einen weiteren Durchlauf startet. Dieser zweite Durchlauf in der Zeit von 24 sec bis 28,5 sec ist im Diagramm U1 ebenfalls dargestellt. In der Zwischenzeit, und zwar in der Zeit von 6 sec bis 10,5 sec führt der Umschalter U2 einen Durchlauf aus. Die Umschalter U3 und U4 starten bei 12 und bei 18 sec.

Der Umschalter U0 schaltet, wie das Diagramm U0 zeigt, alle 6 sec von einer seiner vier Schaltstellungen 1 bis 4 in die nächste Schaltstellung, um dann nach 24 sec mit einem neuen Durchlauf zu starten. Im Diagramm U0' ist über der Zeit t in Sekunden die Spannung u aufgetragen und hierbei angenommen, daß beim ersten Durchlauf des Umschalters U1 in der Zeit von 0 bis 4,5 sec kein die Schwellwertspannung uo überschreitender Fehlersignalwert auftritt. In der Schaltstellung 0 des Umschalters U1 nach Fig. 9 ist überhaupt keine Spannung vorhanden, weil das ODER-Gatter OG in diesem Falle nicht anspricht. In den weiteren Schaltstellungen 1 bis 7 des Umschalters U1 treten irgendwelche kleineren Spannungswerte auf, die die Form einer Treppenfunktion aufweisen. In den Schaltstufen 8 bis 10, die jeweils mehrere Schaltkontakte gleichzeitig umfassen, treten Binärzeichen auf. Das Fehlerregistriergerät DALO wird im Zeitraum zwischen 0 und 6 sec nicht aktiviert, weil die Spannung am ODER-Gatterausgang Null war. Beim nächsten Durchlauf in der Zeit von 24 sec bis 28,5 sec sei angenommen, daß ein Fehlerkanal einen zu registrierenden Fehler anzeigt. Das zeigt sich zunächst darin, daß in der Schaltstellung 0 des Umschalters U1 nunmehr eine Spannung auftritt, die das Fehlerregistriergerät aktiviert. Diese Aktivierung wird verursacht durch den Fehlerkanal 3, dessen Fehlersignalspannung die Schwellwertspannung uo überschreitet. In diesem Zusammenhang ist erwähnenswert, daß die Schwellwertspannung uo hier nur aus Gründen der Einfachheit für alle Grenzwertüberprüfer GÜ1, GÜ2 ... GÜ7 gleich angenommen ist. In der Praxis können die Schwellwerte der Grenzwertüberprüfer natürlich unterschiedlich gewählt sein je nach der erforderlich gehaltenen Bewertung der in den einzelnen Fehlerkanälen auftretenden Fehlersignale.

Das unterste Diagramm in Fig. 9 zeigt schließlich die Aktivierungsfunktion des Fehlerregistriergerätes und ist deshalb mit DALO bezeichnet. Auf der Ordinate bedeuten A = "Aus" und E = "Ein". Beim ersten Umlauf des Umschalters U1 im Zeitintervall von 0 bis 6 sec ist mangels zu registrierender Fehler das Fehlerregistriergerät in deaktiviertem Zustand, während es beim nächsten Durchlauf des Umschalters U1 im Zeitintervall von 24 bis 30 sec aktiviert ist.

Fig. 10 zeigt weitere Zeitdiagramme, die auf den Fehlerkanal K1 nach Fig. 2 bezogen sind und jeweils dem Verlauf der Spannung u am Ausgang x des Zählers mit nachgeschaltetem Decodierer Z/D, am Ausgang y des Maximalwertspeichers MM und am Ausgang z des Grenzwertüberprüfers GÜ1 über der Zeit t in Sekunden angeben. Die Diagramme sind entsprechend mit X, Y und Z bezeichnet. Die am Ausgang x das Zählerergebnis in analoger Form aufgrund des Taktes 1s nur im Abstand von einer Sekunde auftritt, ergibt sie am Anschluß x die im Diagramm X gezeigte Treppenspannungsfunktion, die im Zeitbereich von 28 und 29 sec und im Zeitbereich von 42 und 43 sec die Schwellwertspannung uo überschreitet. Am Ausgang y des Maximalwertspeichers ergibt sich danach ebenfalls eine Treppenkurve, die jedoch aufgrund der Eigenart des Maximalwertspeichers lediglich eine aufsteigende Tendenz hat und am Ende eines 24-sec-Zyklus auf den Wert Null zurückgeht.

Im Diagramm Z ist der grundsätzliche Spannungsverlauf, wie er im Diagramm Y vorhanden ist, ebenfalls vorhanden, da, wie Fig. 4 verdeutlicht, der Anschluß y auch unmittelbar mit dem Anschluß z verbunden ist. Der Ausgang des eigentlichen Grenzwertüberprüfers CÜ1 findet sich zunächst im Spannungszustand "L", in dem die Spannung praktisch den Wert Null aufweist. Erst beim Zeitpunkt 28 sec überschreitet die Spannung am Anschluß y die Schwellwertspannung uo und veranlaßt den Grenzwertüberprüfer GÜ1 an seinem Ausgang zu einem Potentialsprung, indem sein Ausgang nun den Spannungszustand "H" aufweist, der hierbei einen wesentlich höheren Spannungswert hat, als der am Anschluß y möglicherweise auftretende maximale Spannungswert. Auf diese Weise ist erreicht, daß das Fehlerregistriergerät DALO das Ansprechen des Grenzwertüberprüfers eindeutig erkennen kann.

**Patentansprüche**

1. Geräteanordnung zur Ermittlung von Fertigungsfehlern bei der Herstellung von optisch auslesbaren plattenförmigen Informationsträgern hoher Speicherdichte mit hierin abgespeicherter Information in Form eines fehlerkorrigierenden Codes, insbesondere Compact Disc, dadurch gekennzeichnet, daß für die zu überprüfenden Informationsträger wenigstens ein Wiedergsbegerät (PR) vorgesehen ist, dessen Fehlerkorrektursystem, und zwar wenigstens das der Information zugeordnete Fehlerkorrektursystem, hinsichtlich seiner Fehleranzeige- bzw. Fehlersignalausgänge (C1F1, C1F2, C2F1, C2F2) über eine Schnittstelle (IU) mit einer in verschiedene Fehlerkanäle unterteilten Fehlerauswerteeinheit (FAE1, FAE2, ... FAE4) verbunden ist, in der in den verschiedenen Fehlerkanälen (K1, K2 ... K7) die angezeigten Fehlerinformationen in einem periodischen ersten Zyklus erfaßt und jeweils an einen Maximalwertspeicher (MM, MM42) mit nachgeschaltetem Grenzwertüberprüfer (GÜ1, GÜ2, ... GÜ7) übergeben werden, daß ferner die Maximalwertspeicher in einem periodischen zweiten Zyklus, dessen Periodenlänge ein Vielfaches der Periodenlänge des ersten Zyklus beträgt, in ihren informationsfreien Ausgangszustand rückgesetzt werden, daß außerdem der Fehlerauswerteeinheit über eine Abfrageeinrichtung (AE) ein Fehlerregistriergerät (DALO) nachgeschaltet ist und daß die Abfrageeinrichtung in einem dritten Zyklus, dessen Wiederholungsperiode gleich der des zweiten Zyklus ist, die Fehlerkanalausgänge der Fehlerauswerteeinheit abfrägt und die Abfrageergebnisse in Form eines Fehlerkanal-Informationsblocks an das Fehlerregistriergerät abgibt.

2. Geräteanordnung nach Anspruch 1, dadurch gekennzeichnet, daß für die zu Überprüfenden Informationsträger zwei und mehr jeweils mit einer Schnittatelle ausgerüstete Widergabegeräte vorhanden sind, daß ferner jedes Wiedergabegerät über seine Schnittstelle (IU1, IU2, ... IU4) mit einer Fehlerauswerteeinheit (FAE1, FAE2,... FAE4) verbunden ist, daß außerdem das Fehlerregistriergerät (DALO) über die Abfrageeinrichtung (AE) hinweg sämtlichen Fehlerauswerteeinheiten gemeinsam zugeordnet ist und daß die Abfrageeinrichtung periodisch im dritten Zyklus die Fehlerauswerteeiinheiten nacheinander abfrägt und die Abfrageergebnisse in Form von den einzelnen Fehlerauswerteeinheiten zugehörigen Fehlerkanal-Informationsblocks an das Fehlerregistriergerät abgibt.

3. Geräteanordnung nach Anspruch 1 oder 2, dadurch gekennzeichnet, daß die einem Wiedergabegerät (PR) zugeordnete Fehlerauswerteeinheit (FAE) zur Bildung von Radius- und Fokusfehlerkanälen (Rad, Foc) über die Schnittstelle (IU) hinweg zusätzlich mit den Fehlersignalausgängen des optischen Nachführsystems (ON) verbunden ist.

4. Geräteanordnung nach einem der vorhergehenden Ansprüche, dadurch gekennzeichnet, daß die einem Wiedergabegerät (PR) zugeordnete Fehlerauswerteeinheit (FAE) zur Bildung eines HF-Pehlerkanals über die Schnittstelle (IU) hinweg zusätzlich mit dem Hochfrequenzsignalweg der vom Informationsträger ausgelesenen Information verbunden ist.

5. Geräteanordnung nsch einem der vorhergehenden Ansprüche, dadurch gekennzeichnet, daß die einem Wiedergabegerät (PR) zugeordnete Fehlerauswerteeinheit (FAE) zur Bildung von Sonderkanälen für Spielzeit und Bestellnummerangaben über die Schnittstelle (IU) hinweg zusätzlich mit entsprechenden Ausgängen des hierfür im Wiedergabegerät vorgesehenen Subcode-Prozessors (SP) verbunden ist und daß im Zuge einer Abfrage der Fehlerkanalausgänge der Fehlerauswerteeinheit gleichzeitig auch die Ausgänge dieser Sonderkanäle abgefragt sind und ihre Information mit zur Kennzeichnung der von der Abfrageeinrichtung (AE) an das Fehlerregistriergerät (DALO) abgegebenen Fehlerkanal- Informationsblöcke verwendet ist.

6. Geräteanordnung nach einem der vorhergehenden Ansprüche, dadurch gekennzeichnet, daß die Fehlerauswerteeinheit (FAE) einen weiteren Sonderkanal in Form eines Speichers für die Aufnahme der Nummer des der Fehlerauswerteeinheit zugehörigen Wiedergabegerätes (PR) aufweist, dessen Ausgang im Zuge eines Abfragezyklus von der Abfrageeinrichtung (AE) ebenfalls mit abgefragt wird und zur weiteren Kennzeichnung der von der Abfrageeinrichtung an das Fehlerregistriergerät (DALO) abgegebenen Fehlerkanal-Informationsblöcke dient.

7. Geräteanordnung mit zwei und mehr Wiedergabegeräten nach einem der vorhergehenden Ansprüche, dadurch gekennzeichnet, daß ein Kontrollpult (KPT) zur wahlweisen Sperrung der Fehlerkanäle der den Wiedergabegeräten zugeordneten Fehlerauswerteeinheiten (FAE1, FAE2, ... FAE4) sowie zur gemeinsamen Taktversorgung der Fehlerauswerteeinheiten und der Abfrageeinrichtung (AE) vorgesehen ist.

8. Geräteanordnung nach einem der vorhergehenden Ansprüche, dadurch gekennzeichnet, daß die Abfrageeinrichtung (AE), bezogen auf eine Fehlerauswerteeinheit (FAE1, FAE2, ... FAE4), eine erste Abfragestellung für den Ausgang eines ODER-Gatters (OG) aufweist, das eingangsseitig wenigstens mit den Fehlerkanalausgängen der Fehlerauswerteeinheit verbunden ist, die über die Schnittstelle (IU1, IU2, ... IU4) mit den Fehleranzeige- bzw. Fehlersignalausgängen (C1F1, C1F2, C2F1, C2F2) des der Information zugeordneten Fehlerkorrektursystems in Verbindung stehen und daß das Fehlerregistriergerät (DALO) für die Zeit eines Abfragezyklus nur dann aktiviert ist, wenn am Ausgang des ODER-Gatters ein Fehlersignsl als vorhanden angezeigt ist.

9. Gerätesnordnung nach einem der vorhergehenden Ansprüche, dadurch gekennzeichnet, daß von den auf der Ausgangsseite einer Schnittstelle (IU1, IU2, ... IU4) eines Wiedergabegerätes (PR) vorhandenen Fehlersignalsnschlüssen in der Fehlerauswerteeinheit (FAE1, FAE2, ... FAE4) zwei und mehr (E11, E21, E31) durch ein Gatter (OG1) zu einem Fehlerkanalanschluß Zusammengefaßt sind.

10. Geräteanordnung nach einem der vorhergehenden Ansprüche, <u>dadurch gekennzeichnet</u>, daß der auf der Ausgangsseite einer Schnittstelle (IU1, IU2, ... IU4) eines Wiedergabegerätes (PR) vorhandenen Fehlersignalanschluß (Rad) in der Fehlerauswerteeinheit (FAE1, FAE2, ... FAE4) im Hinblick auf eine unterschiedliche Fehlersignalauswertung in zwei und mehr Fehlerkanalanschlüsse aufgeteilt ist.

10. Geräteanordnung nach einem der vorhergehenden Anprüche, <u>dadurch gekennzeichnet</u>, daß der auf der Ausgangsseite einer Schnittstelle (IU1, IU2, ... IU4) eines Wiedergabegerätes (PR) vorhandene Fehlerslgnalsnschluß (Rad) in der Fehlerauswerteeinheit (FAE1, FAE2, ... FAE4) im Hinblick auf eine unterschiedliche Fehlersignalauswertung in zwei und mehr Fehlerkanalanschlüsse aufgeteilt ist.

**Claims**

1. An apparatus arrangement for detecting fabrication errors in the manufacture of high-storage-density optically readable, discshaped information carriers having information stored therein in the form of an error-correcting code, characterized in that for the information carriers to be tested there is provided at least one playback apparatus (PR), whose error-correction system, i.e. at least the error-correction system for the information, whose error-indication and error-signal outputs (C1F1, C1F2, C2F1, C2F2) are connected, <u>via</u> an interface (IU), to an error-interpretation unit (FAE1, FAE2..., FAE4) comprising a plurality of error-channels, in which unit in said plurality of error-channels (K1, K2. ..K7) the detected error information is processed in a periodic first cycle and is transferred to a maximum-value memory (MM, MM42) which is followed by a limit-value check module (GÜ1, GÜ2, ...GÜ7), in that further the maximum- value memories are reset to their information-free initial states in a periodic second cycle whose period is a multiple of the period of the first cycle, in that moreover the error-interpretation unit is connected to an error-registration device (DALO) <u>via</u> an interrogation device (AE), and in that in a third cycle, whose period is equal to that of the second cycle, the interrogation device interrogates the error-channel outputs of the error-interrogation unit and transfers the interrogation results to the error-registration device in the form of an error-channel information block.

2. An apparatus arrangement as claimed in Claim 1, characterized in that for the information carriers to be tested there are provided two or more playback apparatuses each equipped with an interface, in that further each playback apparatus is connected to an error-interpretation unit (FAE1, FAE2..., FAE4) <u>via</u> its interface (IU1, IU2, ...IU4), in that moreover the error-registration device (DALO) is common to all the error-interpretation units, which is achieved <u>via</u> the interrogation device (AE), and in that the interrogation device periodically interrogates the error-interpretation unit after one another in the third cycle and transfers the interrogation results to the error-registration device in the form of error-channel information blocks pertaining to the individual error-interpretation units.

3. An apparatus arrangement as claimed in Claim 1 or 2, characterized in that to form radius and focus error-channels (Rad, Foc), the error-interpretation unit (FAE) associated with a playback apparatus (PR) is connected to the error-signal outputs of the optical tracking system (ON) <u>via</u> the interface (10).

4. An apparatus arrangement as claimed in any one of the preceding Claims, characterized in that, to form an HF error-channel, the error-interpretation unit (FAE) associated with a playback apparatus (PA) is additionally connected, <u>via</u> the interface (IU), to the highfrequency signal path for the information read from the information carrier.

5. An apparatus arrangement as claimed in any one of the preceding Claims, characterized in that, to form special channels for playing-time and order-number indications, the error-interpretation unit (FAE) associated with a playback apparatus (PA) is additionally connected, <u>via</u> the interface (IV), to corresponding outputs of a subcode processor (SP) provided for this purpose in the playback apparatus, and in that during an interrogation of the error-channel outputs of the error-interpretation unit the outputs of said special channels are interrogated simultaneously and the resulting information is employed in qualifying the error-channel information blocks supplied to the errorregistration device (DALO) by the interrogation device (AE).

6. An apparatus arrangement as claimed in any one of the preceding Claims, characterized in that the error-interpretation unit (FAE) comprises a further special channel in the form of a memory for storing the number of the playback apparatus (PA) associated with the error-interpretation unit, the output of said further channel being also interrogated by the interrogation device (AE) during an interrogation cycle for further qualifying the error-channel information blocks supplied to the error-registration device (DALO) by the interrogation device.

7. An apparatus arrangement as claimed in any one of the preceding Claims, comprising two or more playback apparatuses, characterized in that it comprises a control console (KPT) for selectively inhibiting the error-channels of the error-interpretation units (FAE1, FAE2, ... FAE4) associated with the playback apparatuses and for the common clock supply of the error-interpretation units and the interrogation device (AE).

8. An apparatus as claimed in any one of the preceding Claims, characterized in that the interrogation device (AE), in relation to an error-interpretation unit (FAE1, FAE2..., FAE4), comprises a first interrogation position for the output of an OR-gate (OG) whose input side is connected at least to those error-channel outputs of the error-interpretation unit which are connected, via the interface (IU1, IU2, .... IU4) to the error-indication or error-signal outputs (C1F1, C1F2, C2F1, C2F2) of the error-correction system for the information, and in that the error-registration device (DALO) is activated only for the length of an interrogation cycle if an error-signal is indicated to appear on the output of the OR-gate.

9. An apparatus arrangement as claimed in any one of the preceding Claims, characterized in that two or more error-signal connections (E11, E21, E31) provided in the error-interpretaton unit (FAE1, FAE2, ... FAE4) at the output side of an interface (IU1, IU2..., IU4) of a playback apparatus (PR) are combined to form an error- channel connection by means of a gate (OG1).

10. An apparatus arrangement as claimed in any one of the preceding Claims, characterized in that the error-signal connection (RAD) provided in the error-interpretation unit (FAE1, FAE2, ... FAE4) at the output side of an interface (IU1, IU2,. .. IU4) of a playback apparatus (PR) is divided into two or more error channel connections to provide a different error-signal interpretation.

**Revendications**

1. Agencement d'appareils pour déterminer des défauts de fabrication lors de la fabrication de supports d'information en forme de disque à lecture optique ayant une grande densité de mémorisation et dans lesquels est mémorisée de l'information sous la forme d'un code correcteur d'erreur, notamment des disques compacts, caractérisé en ce que, pour le support d'information à contrôler, il est prévu au moins un appareil de lecteure (PR) dont le système de correction d'erreurs, c'est-à-dire au moins le système de correction d'erreurs associé à l'information, est relié par ses sorties d'indication d'erreur ou de signal d'erreur (C1F1, C1F2, C2F1, C2F2) à travers une interface (IU) à une unité d'évaluation d'erreurs (FAE1, FAE2,.... FAE4) subdivisée en plusieurs canaux d'erreur et dans laquelle, dans les différents canaux d'erreur (K1, K2 ... K7) les informations d'erreur indiquées sont détectées dans un premier cycle périodique et sont chaque fois transférées vers une mémoire de valeur maximale (MM, MM42) suivie d'un vérificateur de valeur limite (GÜ1, GÜ2, ... GÜ7), en ce que, dans un deuxième cycle périodique dont la longueur de période est un multiple de la longueur de période du premier cycle, les mémoires de valeur maximale sont remises dans leur état de sortie exempt d'information, en ce qu'en outre, un appareil d'enregistrement d'erreurs (DALO) est connecté après l'unité d'évaluation d'erreurs à travers un dispositif d'interrogation (AE), et en ce que, dans un troisième cycle dont la période de répétition est égale à celle du deuxième cycle, le dispositif d'interrogation interroge les sorties des canaux d'erreur de l'unité d'évaluation d'erreurs et fournit les résultats d'interrogation sous la forme d'un bloc d'information de canal d'erreur à l'appareil d'enregistrement d'erreurs.

2. Agencement d'appareils selon la revendication 1, caractérisé en ce que, pour les supports d'information à contrôler, il est prévu deux appareils de lecture ou plus munis chacun d'une interface, en ce que chaque appareil de lecture est rélié à travers son interface (IU1, IU2,. .. IU4) à une unité d'évaluation d'erreurs (FAE1, FAE2, .... FAE4), en ce que, à travers le dispositif d'interrogation (AE), l'appareil d'enregistrement d'erreurs (DALO) est associé en commun à toutes les unités d'évaluation d'erreurs, et en ce que, périodiquement, dans le troisième cycle, le dispositif d'interrogation interroge successivement les unités d'évaluations d'erreurs et fournit les résultats d'interrogation à l'appareil d'enregistrement d'erreurs sous la forme de blocs d'information de canal d'erreur appartenant aux unités individuel les d'évaluation d'erreurs.

3. Agencement d'appareils selon la revendication 1 ou 2, caractérisé en ce que, à travers l'interface (IU), l'unité d'évaluation d'erreurs (FAE) associée a un appareil de lecture (PR) est reliée en outre aux sorties de signal d'erreur du système de poursuite optique (ON).

4. Agencement d'appareils selon l'une des revendications précédentes, caractérisé en ce que, pour former un canal d'erreur (HF), l'unité d'évaluation d'erreurs (FAE) associée à un appareil de lecture (PR) est reliée en outre, à travers l'interface (IU), au trajet de signal à haute fréquence de l'information lue sur le support d'information.

5. Agencement d'appareils selon l'une des revendications précédentes, caractérisé en ce que, pour former des canaux spéciaux pour la durée de lecture et les indications de numéro de commande, l'unité d'évaluation d'erreurs (FAE) associée à un appareil de lecture (PR) est reliée en outre, à travers l'interface (SU), à des sorties correspondantes du processeur de sous-code (SP) prévu à cet effet dans l'appareil de lecture, et en ce que, en vue d'une interrogation des sorties de canal d'erreur de l'unité d'évaluation d'erreurs, les sorties de ces canaux spéciaux sont simultanément interrogées et leur information est utilisée également pour l'identification des blocs d'information de canal d'erreur fournis par le dispositif d'interrogation (AE) à l'appareil d'enregistrement d'erreurs.

6. Agencement d'appareils selon l'une des revendications précédentes, caractérisé en ce que l'unité d'évaluation d'erreurs (FAE) présente un autre canal spécial constitué par une mémoire pour enregistrer le numéro de l'appareil de lecture (PR) associé à l'unité d'évaluation d'erreurs, canal spécial dont la sortie, lors d'un cycle d'interrogation du dispositif d'interrogation (AE), est également interrogée et sert à l'identification supplémentaire des blocs d'information de canal d'erreur fournis par le dispositif d'interrogation à l'appareil d'enregistrement d'erreurs (DALO).

7. Agencement d'appareils muni de deux appareils de lecture ou plus selon l'une des revendications précédentes, caractérisé en ce qu'il est prévu un pupitre de commande (KPT) pour le blocage facultatif des canaux d'erreur des unités d'évaluation d'erreurs (FAE1, FAE2, ... FAE4) associées aux appareils de lecture ainsi que pour l'alimentation commune en impulsions d'horloge des unités d'évaluation d'erreurs et du dispositif d'interrogation (AE).

8. Agencement d'appareils selon l'une des revendications précédentes, caractérisé en ce que, par rapport à une unité d'évaluation d'erreurs (FAE1, FAE2, ... FAE4), le dispositif d'interrogation (AE) présente une première position d'interrogation pour la sortie d'une porte OU (OG) qui, en entrée, est reliée au moins aux sorties de canal d'erreur de l'unité d'évaluation d'erreurs qui, à travers l'interface (IU1, IU2, ... IU4) sont reliées aux sorties d'indication d'erreur ou de signal d'erreur (C1F1, C1F2, C2F1, C2F2) du système de correction d'erreurs associé à l'information et en ce que, pendant la durée d'un cycle d'interrogation, l'appareil d'enregistrement d'erreurs (DALO) n'est activé que lorsque, sur la sortie de la porte OU, un signal d'erreur est indiqué comme étant présent.

9. Agencement d'appareils selon l'une des revendications précédentes, caractérisé en ce que, parmi les bornes de signal d'erreur dans l'unité d'évaluation d'erreur (FAE1, FAE2,... FAE4), présentes du côté de sortie d'une interface (IU1, IU2, ...IU4) d'un appareil de lecture (PR), au moins deux (E11, E21, E31) sont réunies par une porte (OG1) en une seule borne de canal d'erreur.

10. Agencement d'appareils selon l'une des revendications précédentes, caractérisé en ce que la borne de signal d'erreur (Rad) dans l'unité d'évaluation d'erreurs (FAE1, FAE2, .... FAE4), présente du côté de sortie d'une interface (IU1, IU2, ... IU4), est divisée en deux bornes de canal d'erreur ou plus en vue d'une évaluation différente de signal d'erreur.

# FIG 1

FIG 2

## FIG 3

## FIG 4

## FIG 7

## FIG 5

## FIG 8

## FIG 6

EP 0 144 831 B1

FIG 9

FIG 10

7